# EUROPEAN PATENT APPLICATION

(11) **EP 2 750 073 A1**
(43) Date of publication of application: **02.07.2014**
(21) Application number: 14161567.4
(22) Date of filing: 17.01.2012
(51) Int. Cl.: G06F 21/57, G06F 21/74

(54) **Method and apparatus for managing security state**

(30) Priority: 04.02.2011 US 201113021071
(62) Divisional of application: 12703637.4
(71) Applicant: Motorola Mobility LLC, Libertyville, IL 60048 (US)
(72) Inventor: Voss, Joel D., Elkhorn, WI 53121 (US)
(74) Representative: Boult Wade Tennant

(57) **Abstract**

A method and apparatus for managing security state transitions within a device is provided herein. During operation a security token will indicate whether or not a device is operating in a secured or unsecured state. The security token controls whether or not image validation will take place and if access to security critical resources is allowed. The method and apparatus allow (503) only approved images to be stored and executed on the device, and allow (503) security dependent features to be fully operational when it has been determined (501) that the security token is present. The method and apparatus allow (505) non-approved images to be stored and executed on the device, and not allow (505) security dependent features to be fully operational when it has been determined (501) that the security token is not present.

## Description

### Field of the Invention

The present invention relates generally to moving between unsecured and secured modes within a device and in particular, to a method and apparatus for managing security state transitions within a device.

### Background of the Invention

Many devices are "locked" at the factory, and accept only approved images to be stored and executed on the device. However, some devices are able to be "unlocked" so that developers can experiment with software being developed, but not yet approved. For example, certain devices running the Android operating system may require the device to be un-lockable for the purposes of flashing unsigned, non-approved images. A lock function ideally is also provided to re-lock the device and place it back into a secure state. When the device is unlocked, certain security dependent features that require privacy/secrecy, such as Digital Rights Management (DRM), must be disabled. If the device is to be re-locked, it is desirable for the device to operate in its original, secure condition where the previously disabled features are once again fully operational. Therefore, the state transition must be securely managed so that privacy and secrecy requirements are met.

A modem smartphone operating system (OS) uses read/write file systems that are dynamically updated and therefore their integrity cannot be validated using a static code signature on each boot of the device. Rather, the integrity of these file systems can only be ensured when they are first programmed into a memory partition, and through digital signature verification of updates that are later applied. It is required to securely maintain a verification state of these images so that if an unauthorized image is stored, its integrity will be validated prior to use. If a user is allowed to switch to an unlocked state (un-secure state), they will have full control to manipulate these file systems. Therefore it becomes critical to securely manage the state transition back to secure mode, so the trusted boot process will validate the integrity of all images that are required to establish a trusted system. Therefore a need exists for a method and apparatus for managing security state transitions within a device that insures that only valid images are stored on the device when moving from an unsecured state to a secured state, and that security critical resources are only made available to software executing in the secure state.

### Brief Description of the Drawings

FIG. 1 is a block diagram of a device.
FIG. 2 is a block diagram of the device of FIG. 1.
FIG. 3 is flow chart showing operation of the device of FIG. 1 when moving from a secured state to an unsecured state.
FIG. 4 is flow chart showing operation of the device of FIG. 1 when moving from an unsecured state to a secured state.

Skilled artisans will appreciate that elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present invention. Also, common but well-understood elements that are useful or necessary in a commercially feasible embodiment are often not depicted in order to facilitate a less obstructed view of these various embodiments of the present invention. It will further be appreciated that certain actions and/or steps may be described or depicted in a particular order of occurrence while those skilled in the art will understand that such specificity with respect to sequence is not actually required. Those skilled in the art will further recognize that references to specific implementation embodiments such as "circuitry" may equally be accomplished via replacement with software instruction executions either on general purpose computing apparatus (e.g., CPU) or specialized processing apparatus (e.g., DSP). It will also be understood that the terms and expressions used herein have the ordinary technical meaning as is accorded to such terms and expressions by persons skilled in the technical field as set forth above except where different specific meanings have otherwise been set forth herein.

### Detailed Description of the Drawings

In order to alleviate the above-mentioned need, a method and apparatus for managing security state transitions within a device is provided herein. During operation a security token will be utilized that indicates whether or not a device is operating in a secured or unsecured state. The security token controls whether or not image validation will take place and if access to security critical resources are allowed. When a switch to a non secure state is made, the security token will be eliminated and blocked from recreation in the non-secure state, thus preventing non-secure code from spoofing a secure state indication. In the non-secure state, image validation is bypassed and the non-secure code is allowed to execute. Once a switch back to a secure state takes place, the secure token is recreated and all images on the device are analyzed to determine if they are approved. The device will only execute valid images and allow access to critical security resources in the secure state.

The present invention encompasses a method comprising the steps of operating in a secure state, determining that a transition to an unsecure state has taken place, and erasing a token when it is determined that the transition to the unsecured state has taken place, wherein the token is utilized to indicate a secure state.

The present invention additionally encompasses method comprising the steps of booting a device and determining if a security token is present. Only approved images are allowed to be stored and executed on the device, and security dependent features are fully operational when it has been determined that the security token is present. Non-approved images are allowed to be stored and executed on the device, and allowing security dependent features are not allowed to be fully operational when it has been determined that the security token is not present.

The present invention encompasses apparatus comprising memory storing a token and a processor determining that a transition to an unsecure state has taken place, and erasing the token when it is determined that the transition to the unsecured state has taken place.

The present invention additionally encompasses an apparatus comprising a a processor and a memory storing a token. The processor executes the steps of determining if a security token is present. Only approved images are allowed to be stored and executed on the device, and security dependent features are fully operational when it has been determined that the security token is present. Non-approved images are allowed to be stored and executed on the device, and allowing security dependent features are not allowed to be fully operational when it has been determined that the security token is not present.

Prior to describing operation of a method and apparatus for managing security state transitions within a device, the following definitions are provided:
- Secure State - A device operating in a secure state is executing valid, approved software and has access to security critical resources contained in the device hardware.
- Unsecure State - A device operating in an unsecure state may execute unapproved software, and is not allowed access to security critical resources contained in the device hardware.
- Boot loader - a trusted component in a chain of trust that is established by a secure boot ROM. Trust is established by cryptographically validating a digital signature on the boot loader, as well as checking its revocation status. The boot loader is used to initiate the secure/unsecure state transition, and is responsible for validating images, controlling access to security critical hardware resources, and booting the device Operating System (OS).
- Key Encryption Key (KEK) - is a device unique secret that is held in cryptographic hardware on a device. It can be overwritten and/or disabled by software and thus prevented from being accessed by un-trusted software until a next boot cycle. Device secrets and OEM data may be protected by the KEK or a derived KEK protected key hierarchy through means of encryption, digital signature, and/or Message Authentication

Codes (MAC). If the KEK is disabled, secrets protected by it will no longer be accessible while the key is disabled. Most commonly the KEK is a symmetric key, using an algorithm such as AES or 3DES.
- Secure Partition (SP) is a partition that is used to store a security token that indicates a security state and validation status of a file system. Access by un-trusted software in the non-secure state is assumed.
- Token - is an image/file that holds the security state information for the device. The token is integrity protected using the KEK, and can be generated by the secure boot loader while the KEK and associated cryptographic hardware is enabled.
- Security Dependent DRM Features - Certain security dependent features provided by the device manufacturer, such as DRM or API Keys, often require confidentiality and integrity such that they can only be accessed by manufacturer approved software.

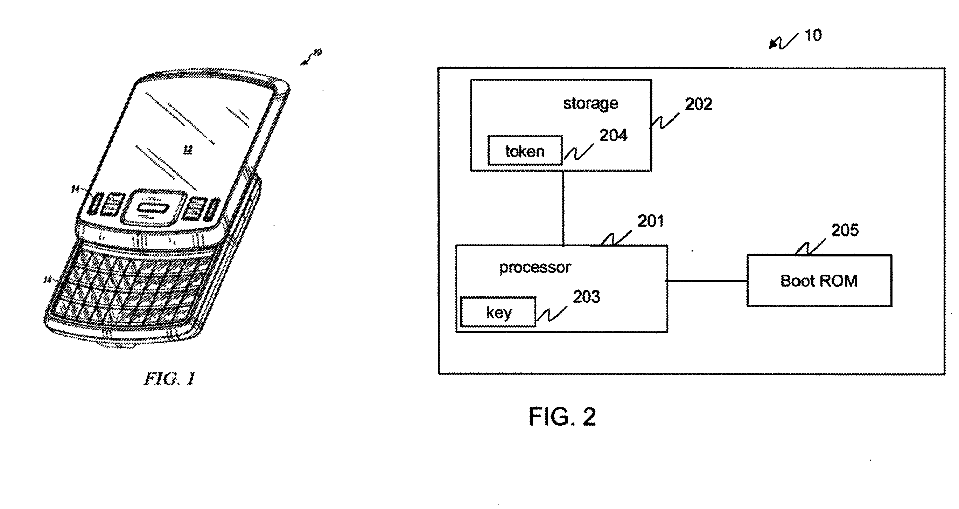

Turning now to the drawings, where like numerals designate like components, FIG. 1 is a block diagram showing mobile device 10. Device 10 includes a GUI 12 and a plurality of data input buttons 14. Device 10 is selected from the group including, but not limited to, a mobile personal computer (PC), a notepad, a net book, a mobile telephone, a laptop computer, a handheld computer and a smart phone. Although the device 10 is mobile, it is intended to have significant computing power capable of executing programs/instruction sets stored as images on device 10. A user can connect device 10 to a variety of peripheral devices (not shown). The peripheral devices are selected from a group including, but not limited to, a computer monitor, a laptop computer, a desktop computer, a tablet PC, and a screen projector.

Now referring to FIG. 2, a more-detailed block diagram of device 10 is shown. As shown, device 10 comprises processor 201, storage 202, boot ROM 205, and key 203. Processor 201 comprises a standard microprocessor controller 201, such as, but not limited to, a Texas Instruments OMAP 3630 microprocessor. Processor 201 preferably runs an operating system such as, but not limited to an Android-based operating system (Open Handset Alliance, www.openhandsetalliance.com). Storage 202 preferably comprises standard random access memory used to store images, programs, and instruction sets. Boot ROM is provided as read-only memory that includes instructions executed by a boot loader during device bootup. Finally, key 203 preferably comprises a cryptographic key (e.g., a KEK), access to which is controlled by a hardware accelerator existing on processor 201 (not shown).

During device bootup, processor 201 executes boot loader instructions comprising a trusted component in a chain of trust that is established by secure boot ROM 205. These instructions are stored within a secure portion of storage 202. Trust is established by cryptographically validating a digital signature on the boot loader, as well as checking its revocation status. The boot loader can be commanded by the end user to place the device 10 in either a secure or a non-secure state.

As discussed above, it becomes critical to securely manage the state transition of device 10 to and from a secure mode, so the boot process of device 10 will control the state transition. In order to accomplish this task, processor 201 will utilize token 204 to indicate whether or not device 10 is operating in a secured or unsecured state. The presence of a token indicates a secure state, while the absence of the token indicates a non-secure state. More particularly, when switching to the non-secure state processor 201 will eliminate token 204 from storage 202. Elimination of the token comprises permanently erasing it from storage such that it cannot be recovered. The elimination of token 204 prevents a replay or backup and restore attack by non-secure software in an effort to trick the secure boot loader into missing the non-secure to secure state transition.

If a valid, secure token is not found, the boot loader assumes a non-secure state, and access to the key 203 is blocked by processor 201. Once a switch back to a secure state takes place, processor 201 recreates the security token 204 and stores it in storage 202. Following this, processor 201 will analyze all images in storage 202 to determine if only approved images exist in storage 202. If so, then processor 201 will allow access to key 203 and transfer execution to the trusted software. Thus, the security token indicates to a secure boot loader two things: 1) all images must be validated prior to granting permission to boot the system; and 2) Allow access to security critical resources (e.g. KEK).

As discussed above, while in a secure state indicated by the presence of a valid security token 204, all images in storage 202 will be analyzed by processor 201 in order to determine if they are approved. This task takes place by validating the cryptographic digital signature of the image, using standard techniques such as, but not limited to, Rivest-Shamir-Adleman public key cryptography (RSA) or Digital Signature Algorithm (DSA). For images that are dynamically updated, the image verification status is re-initialized so as to cause the image signature to be re-validated. Only approved images will be executed by the boot loader while in the secure state.

When transitioning to the secure state, the boot loader will create the security token 204. The security token may comprise a security state indication, as well as versioning and revocation status data. Revocation status data may be used to pair the token with a software version such that the boot loader can determine if the token is revoked and thus should be ignored when determining the secure state indication. This is particularly useful to revoke a secure token when a security vulnerability in the secure software may have allowed the token to be extracted from the device, and thus useful in executing a replay or backup/restore attack in an attempt by non-secure software to spoof a secure state. Token 204 is signed, and optionally encrypted, using the key 203. In this manner, a token cannot be created and signed by non-secure software. The signature may be a symmetric signature, such as a Message Authentication Code (MAC). The boot loader will verify the token signature and revocation status, using the key 203, prior to honoring the token as valid and making use of its contents.

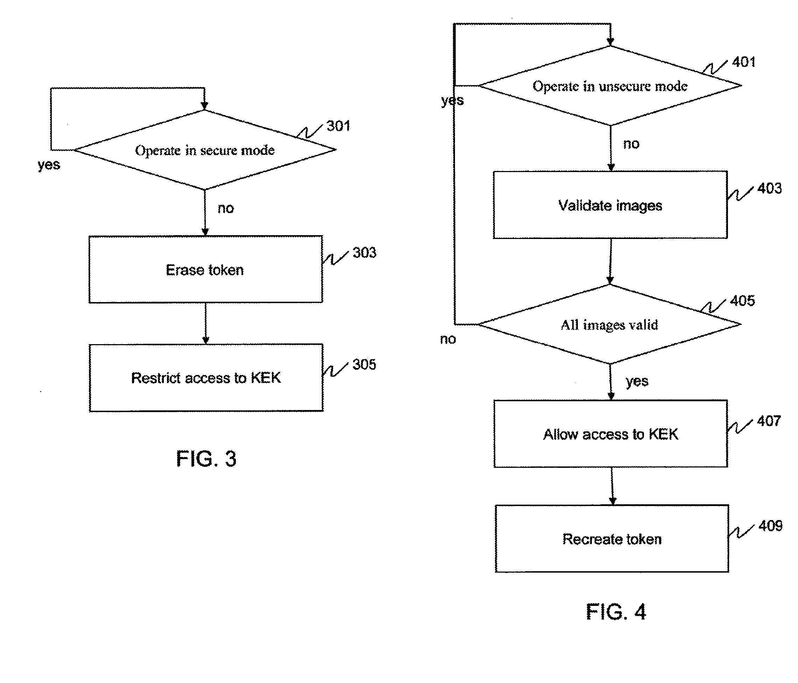

FIG. 3 is a flow chart showing operation of device 10 when moving from a secured state to an unsecured state. It is assumed that device 10 is operating in a secured mode prior to step 301. At step 301 processor 201 determines if device 10 will continue operating in a secure mode. In other words, processor 201 determines if a transition to an unsecure state has taken place. This determination is preferably made when executing boot instructions as part of the boot loader process. If so, the logic flow returns to step 301, otherwise the logic flow continues to step 303 where processor 201 erases token 204. At step 305 processor 201 restricts access to KEK 203. This is accomplished by instructing the hardware accelerator existing on processor 201 to restrict access to KEK 203.

It is essential that device 10 be able to detect the non-secure to secure state transitions. Token 204 contains the secure state indication. It is integrity protected using the KEK so that it cannot be spoofed or updated by unauthorized software. It is only written to the secure partition when transitioning to secure mode from the secure boot loader.

If a secure device contains a security vulnerability which would allow unauthorized access to the KEK, an attacker could create new secure tokens in advance assuming an updated operating system revocation data. To address this, a random factor can be added. For example, a software update which patches the security vulnerability can contain an embedded random number which is used when generating the new token. In order for the token to be considered valid, it must contain the random number embedded in the software update. Because the attacker does not have the random number in advance of the software update, it cannot reasonably be predicted in order to pre-generate tokens. Furthermore, the random number cannot be changed as it is part of the software update which is digitally signed and verified prior to use. Alternatively, if symmetric code signing techniques are used, the random number can be generated by the device when installing the software update and stored as part of the signed image. Each time the token is validated, the random number is checked against the reference to ensure a match prior to considering the token valid.

Any of these techniques will require the token to be updated if a software update changes a revocation or versioning value embedded in the token. The secure boot loader process must effectively start from the non-secure state and re-validate the entire system to ensure its integrity prior to creating a new secure token.

FIG. 4 is a flow chart showing operation of device 10 when moving from an unsecured state to a secured state. The process flow of FIG. 4 may be in added to the process flow of FIG. 3. It is assumed that device 10 is operating in an unsecured mode prior to step 401. At step 401 processor 201 determines if the device is to operate in an unsecured state, and if so, the logic flow returns to step 401. If, at step 401 it is determined that a switch to a secure mode is to take place, the logic flow continues to step 403 where processor 201 attempts to validate all images in storage 202. As discussed above, this may take place via processor 201 executing digital signature verification checks on each image. The logic flow then continues to step 405 where processor 201 determines if all images have been validated. If not, a warning may be provided to the user via GUI 12 and the logic flow returns to step 401. If, however, at step 405 all images have been validated, the logic flow continues to step 407 where processor 201 allows access to KEK, and uses KEK to recreate token 204 (step 409). Token 204 will be stored in a secure partition of storage 202.

In another implementation, when entering a secure state device partitions and verification state are initialized, the token is created, then a reboot takes place. On the next boot, the device attempts to verify the images. If successful, the device will boot with the KEK intact. If unsuccessful, the device will remain in boot-loader mode and request that valid images be programmed (indication via GUI).

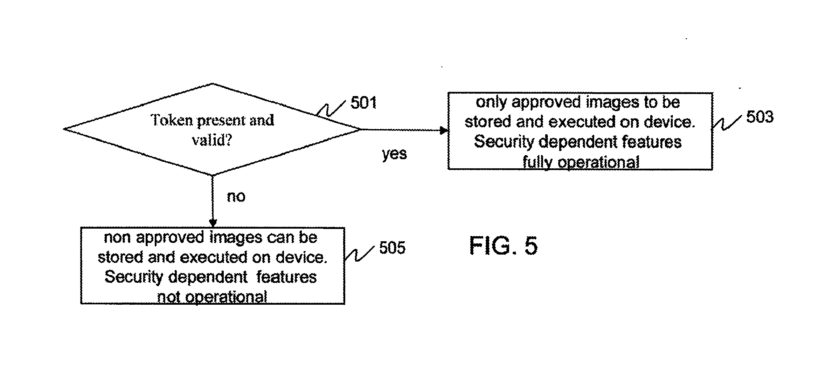

FIG. 5 is a more detailed flow chart showing operation of device 10 during a normal boot process. The logic flow begins at step 501 where processor 201 executes bootup instructions from boot ROM 205. As part of the bootup process, processor 201 determines if a valid token exists (step 503). If so, the integrity of the OS images in storage 202 is ensured and the logic flow continues to step 503 where processor 201 allows only approved images to be stored and executed on the device. The device is now "trusted" and security dependent features are fully operational.

Retuming to step 501, if processor 201 determines that a valid token does not exist, then the logic flow continues to step 505 where processor 201 allows unapproved images to be stored and executed on the device. The device is not trusted so security dependent features will not be operational.

While the invention has been particularly shown and described with reference to a particular embodiment, it will be understood by those skilled in the art that various changes in form and details may be made therein without departing from the spirit and scope of the invention. For example, the processor may hold multiple keys where access to several is controlled by the presence of the secure token. Additionally, the same or different keys may be used to sign and/or encrypt the token as well as protect confidential data used by security dependent features on the device. In the provided embodiment, the boot loader creates the token. Alternatively, the token could be created by an outside source, such as a secured signing server, and delivered to the device over a secured channel. It is intended that such changes come within the scope of the following claims:

Other aspects of the embodiments are defined in the following numbered clauses.
1. A method comprising the steps of:
   operating in a secure state;
   determining that a transition to an unsecure state has taken place;
   erasing a token when it is determined that the transition to the unsecured state has taken place, wherein the token is utilized to indicate a secure state.
2. The method of clause 1 wherein is the token is signed and encrypted with a secure key.
3. The method of clause 2 further comprising the step of restricting access to the secure key when it is determined that the transition to the unsecured state has taken place.
4. The method of clause 1 further comprising the steps of:
   determining that a transition to a secure state is taking place;
   validating images existing in storage;
   creating the token when it is determined that the images have been validated.
5. The method of clause 4 further comprising the step of:
   allowing access to the secure key when it has been determined that the images have been validated.
6. The method of clause 4 wherein the step of creating the token comprises the step of creating the token with a random number.
7. A method comprising the steps of:
   booting a device;
   determining if a security token is present;
   allowing only approved images to be stored and executed on the device, and allowing security dependent features to be fully operational when it has been determined that the security token is present; and
   allowing non-approved images to be stored and executed on the device, and not allowing security dependent features to be fully operational when it has been determined that the security token is not present.
8. The method of clause 7 wherein the token is signed.
9. The method of clause 8 further comprising the step of restricting access to the secure key when it is determined that the security token is not present.
10. The method of clause 7 wherein the token is created with a random number.
11. An apparatus comprising:
   memory storing a token;
   a processor determining that a transition to an unsecure state has taken place, and erasing the token when it is determined that the transition to the unsecured state has taken place.
12. The apparatus of clause 11 wherein is the token is signed.
13. The apparatus of clause 12 wherein the processor restricts access to the secure key when it is determined that the transition to the unsecured state has taken place.
14. The apparatus of clause 11 wherein the processor determines that a transition to a secure state is taking place, validates images existing in storage, and creates the token when it is determined that the images have been validated.
15. The apparatus of clause 14 wherein the processor allows access to the secure key when the images have been validated.
16. The apparatus of clause 11 wherein the token is created with a random number.
17. An apparatus comprising:
   a memory storing a token;
   a processor executing the steps of:
      determining if a security token is present;
      allowing only approved images to be stored and executed on the device, and allowing security dependent features to be fully operational when it has been determined that the security token is present; and
   allowing non-approved images to be stored and executed on the device, and not allowing the security dependent features to be fully operational when it has been determined that the security token is not present.
18. The apparatus of clause 17 wherein the token is signed.
19. The apparatus of clause 18 wherein the processor restricts access to the secure key when it is determined that the security token is not present.
20. The apparatus of clause 17 wherein the token is created with a random number.

## Claims

1. A method comprising the steps of:
booting a device;
determining if a security token is present;
allowing only approved images to be stored and executed on the device, and allowing security dependent features to be fully operational when it has been determined that the security token is present; and
allowing non-approved images to be stored and executed on the device, and not allowing security dependent features to be fully operational when it has been determined that the security token is not present.

2. The method of claim 1 wherein the token is signed.

3. The method of claim 2 further comprising the step of restricting access to the secure key when it is determined that the security token is not present.

4. The method of claim 1 wherein the token is created with a random number.

5. An apparatus comprising:
a memory storing a token;
a processor executing the steps of:
determining if a security token is present;
allowing only approved images to be stored and executed on the device, and allowing security dependent features to be fully operational when it has been determined that the security token is present; and
allowing non-approved images to be stored and executed on the device, and not allowing the security dependent features to be fully operational when it has been determined that the security token is not present.

6. The apparatus of claim 5 wherein the token is signed.

7. The apparatus of claim 6 wherein the processor restricts access to the secure key when it is determined that the security token is not present.

8. The apparatus of claim 5 wherein the token is created with a random number.
